# EUROPÄISCHE PATENTSCHRIFT

(11) **EP 0 900 484 B1**
(45) Veröffentlichungstag und Bekanntmachung des Hinweises auf die Patenterteilung: **05.09.2001**
(21) Anmeldenummer: 97921521.7
(22) Anmeldetag: 20.05.1997
(51) Int. Cl.: H04B 7/26, H04B 7/005, H04B 7/02, H04B 7/04

(54) **VERFAHREN UND VORRICHTUNG ZUR ERHÖHUNG DER TEILNEHMERKAPAZITÄT IN EINEM ZELLULAREN MOBILFUNKNETZ**
PROCESS AND DEVICE FOR THE INCREASE OF SUBSCRIBER CAPACITY IN A CELLULAR MOBILE RADIO NETWORK
PROCEDE ET DISPOSITIF POUR AUGMENTER LA CAPACITE EN ABONNES D'UN RESEAU DE TELECOMMUNICATION MOBILE CELLULAIRE

(30) Priorität: 20.05.1996 AT 88896
(43) Veröffentlichungstag der Anmeldung: 10.03.1999
(73) Patentinhaber: Telekom Austria Aktiengesellschaft, 1011 Wien (AT)
(72) Erfinder: FUHL, Josef, A-1040 Wien (AT); BONEK, Ernst, A-1040 Wien (AT)
(74) Vertreter: Müllner, Erwin, Dr.
(86) Internationale Anmeldenummer: AT9700105
(87) Internationale Veröffentlichungsnummer: WO9744919

(56) Entgegenhaltungen:
- US-A- 5 515 378
- LINDSKOG E ET AL: "Spatio-temporal equalization for multipath environments in mobile radio applications" 1995 IEEE 45TH VEHICULAR TECHNOLOGY CONFERENCE. COUNTDOWN TO THE WIRELESS TWENTY-FIRST CENTURY (CAT. NO.95CH35821 AND 95CB35821), 1995 IEEE 45TH VEHICULAR TECHNOLOGY CONFERENCE. COUNTDOWN TO THE WIRELESS TWENTY-FIRST CENTURY, CHICAGO, IL, USA, 25-28 , ISBN 0-7803-2742-X, 1995, NEW YORK, NY, USA, IEEE, USA, Seiten 399-403 vol.1, XP002039918 in der Anmeldung erwähnt
- RATNAVEL S ET AL: "MMSE space-time equalization for GSM cellular systems" 1996 IEEE 46TH VEHICULAR TECHNOLOGY CONFERENCE. MOBILE TECHNOLOGY FOR THE HUMAN RACE (CAT. NO.96CH35894), PROCEEDINGS OF VEHICULAR TECHNOLOGY CONFERENCE - VTC, ATLANTA, GA, USA, 28 APRIL-1 MAY 1996, ISBN 0-7803-3157-5, 1996, NEW YORK, NY, USA, IEEE, USA, Seiten 331-335 vol.1, XP002039919 in der Anmeldung erwähnt
- CHEUNG J C S ET AL: "SOFT-DECISION FEEDBACK EQUALIZER FOR CONTINUOUS PHASE MODULATED SIGNALS IN WIDEBAND MOBILE RADIO CHANNELS" IEEE TRANSACTIONS ON COMMUNICATIONS, Bd. 42, Nr. 2/03/04, 1.Februar 1994, Seiten 1628-1638, XP000447396

## Beschreibung

Die Erfindung betrifft ein Verfahren zur Datenübertragung in einem zellularen Mobilfunknetz, bei dem in mindestens einer Sende/Empfangsstation eine phasengesteuerte Antennengruppe mit mehreren Einzelantennen vorgesehen ist, die zur Erzielung einer Richtcharakteristik mit einer Schaltung zur adaptiven Beeinflussung der Antennensignalgewichtsfaktoren versehen ist und in der zur Adaption der Antennensignalgewichtsfaktoren eine nichtlineare Struktur zur Antennensignalverarbeitung eingesetzt wird, wobei die nichtlineare Struktur aus Vorwärtsfilter, Rückkopplungsfilter und Entscheider besteht und die Antennensignale der Einzelantennen zunächst über das Vorwärtsfilter geführt, dann dem Entscheider zugeführt und vom Entscheider über das Rückkopplungsfilter geführt werden, wonach das Ausgangssignal des Rückkopplungsfilters vom Ausgangssignal des Vorwärtsfilters subtrahiert wird. Sie betrifft auch eine Vorrichtung zur Datenübertragung in einem zellularen Mobilfunknetz, in der eine phasengesteuerte Antennengruppe mit mehreren Einzelantennen vorgesehen ist, die zur Erzielung einer Richtcharakteristik mit einer Schaltung zur adaptiven Beeinflussung der Antennensignalgewichtsfaktoren versehen ist und in der zur Adaption der Antennensignalgewichtsfaktoren eine nichtlineare Struktur zur Antennensignalverarbeitung eingesetzt wird, wobei die nichtlineare Struktur aus Vorwärtsfilter, Rückkopplungsfilter und Entscheider besteht und die Einzelantennen an die Eingänge des Vorwärtsfilters angeschlossen sind, der Ausgang des Vorwärtsfilters an einen Subtrahierer angeschlossen ist, dessen Ausgang mit dem Eingang des Entscheiders verbunden ist, dessen Ausgang mit dem Eingang des Rückkopplungsfilters verbunden ist, dessen Ausgang mit dem zweiten Eingang des Subtrahierers verbunden ist.

Bei solch einem Verfahren bzw. solch einer Vorrichtung gibt es also eine phasengesteuerte Antennengruppe, versehen mit einer Schaltung zur adaptiven Beeinflussung der Antennensignalgewichtsfaktoren, sodaß eine Richtcharakteristik erzielt wird. Diese Schaltung beeinhaltet üblicherweise Mischer, eine Zeit- und Wertdiskretisierung der Empfangssignale der Einzelantennen der Antennengruppe sowie eine Signalverarbeitungsschaltung.

### STAND DER TECHNIK

Das nur begrenzt zur Verfügung stehende elektromagnetische Spektrum einerseits und die rapid zunehmende Zahl von Mobilfunkteilnehmern und -diensten anderseits zwingen zur effizienteren Ausnützung des einem Netzbetreiber zur Verfügung stehenden Frequenzbandes. Da bekannte Zugriffsverfahren, wie FDMA, TDMA und CDMA bereits ihre Kapazitätsgrenzen erreicht haben (z.B. in GSM, Global System for Mobile Communications) und Mikrozellen in städtischen Ballungsgebieten sowie der Halbraten-Koder für GSM bereits in Verwendung stehen, sind neuartige effiziente Zugriffsverfahren zur Kapazitätssteigerung höchst wünschenswert. Richtungsaufgelöster Empfang stellt eine erfolgversprechende neue Technik zur Erhöhung der Reichweite, Verminderung der Gleichkanalstörungen, Verringerung des Frequenzwiederholabstandes und damit zur Erhöhung der Teilnehmerkapazität eines Mobilfunknetzes dar.

Die Erhöhung der Reichweite ist in schwach besiedelten Gebieten von Interesse, darüber hinaus auch für große Schirmzellen, die den überlaufenden Verkehr von untergeordneten Mikrozellen übernehmen sollen. Ein weiterer interessanter Anwendungsfall ist der Funkzugang für Festnetzteilennehmer ("radio in the local loop", RLL bzw. "radio in the loop", RITL).

Die Gleichkanalstörungen sind bekanntlich der limitierende Einflußfaktor für gut ausgebaute zellulare Mobilfunknetze.

Richtungsaufgelöster Empfang, der ein Maximum des Richtdiagramms der Empfangsantenne in Einfallsrichtung des gewünschten Signals (eines Teilnehmers) und/oder Nullstellen dieses Richtdiagramms in die Einfallsrichtung vcn Störsignalen legt, vermindert die Gleichkanalstörungen. Diese Störsignale sind z.B. Signale, die entweder anderen Teilnehmern in derselben Zelle zugeordnet sind, oder von Teilnehmern in fremden (entfernteren) Zeilen stammen. Durch diese Vorgangsweise wird es möglich, den Frequenzwiederholabstand zu verringern, im Extremfall bis zur Wiederverwendung derselben Frequenz in einer Nachbarzelle (Kanalgruppenzahl gleich eins). Für die Erhöhung der Teilnehmerkapazität eines Mobilfunknetzes gibt es aber auch noch die Möglichkeit, mehrere Teilnehmer auf ein- und derselben Frequenz und demselben Zeitschlitz in derselben Funkzelle zu bedienen. Der dafür übliche Ausdruck SDMA, Space Division Muliple Access, ist unpräzise: es sollte eigentlich Angle Division Muliple Access heißen. Bei heute vorgeschlagenen Verfahren zum richtungsaufgelösten Empfang stellt die Untergrenze der winkelmäßigen Trennung, ab der das Verfahren versagt, ein schwieriges Problem dar. Im Idealfall sollte diese Untergrenze 0° betragen.

Sollen nun mehr als ein Teilnehmer in einer Funkzelle mit derselben Frequenz und auf demselben Zeitschlitz versorgt werden, stellt das gewünschte Signal eines Teilnehmers ein Störsignal für alle anderen Teilnehmer dar und vice versa. SDMA ermöglicht die richtungsmäßige Trennung der einzelnen Teilnehmersignale und daran anschließend die Detektion der jedem Teilnehmer zugeordneten Signale.

Der derzeitige Stand der Technik ist z.B. in T. Bull, M. Barrett, R. Arnott, "Technology in Smart Antennas for Universal Advanced Mobile Infrastructure (TSUNAMI R2108) - Overview", Proc, RACE Mobile Telecommunications Summit, Cascais, Portugal, November 22-24, 1995, S. 88-97 sowie in M. Tangemann, C. Hoeck, and R. Rheinschmitt, "Introducing Adaptive Array Antenna Concepts in Mobile Communication Systems", RACE Mobile Communications Workshop, May 17-19, 1994, Amsterdam, S. 714-727 beschrieben.

Es wird dabei eine Antennengruppe mit veränderbarer Richtcharakteristik verwendet, welche zur Trennung von gewünschtem Teilnehmer-Signal und Störsignalen (in Summe auch als "Interferenz" bezeichnet) eingesetzt wird. Dabei wird das Signal jedes einzelnen Antennenelementes der Gruppe auf eine tiefere Frequenz gemischt (Zwischenfrequenz ZF oder Basisband BB). Diese ZF- bzw. BB-Signale werden nun zeit- und wertdiskretisiert und als Eingangsgrößen für einen leistungsfähigen Algorithmus verwendet. Der Algorithmus, welcher die Richtcharakteristik durch adaptive Beeinflussung der Antennensignalgewichtsfaktoren bestimmt, wird auf einem Signalprozessor oder Ähnlichem realisiert. Bei diesen Algorithmen handelt es sich entweder um "temporal-reference" Algorithmen, wie sie z.B. in S. Ratnavel, A, Paulraj and A.G. Constantinides "MMSE Space-Time Equalization for GSM Cellular Systems", Proc. Institute of Electrical and Electronics Engineers, IEEE, Vehicular Technology Conference 1996, VTC '96, Atlanta, Georgia, S. 331-335, E. Lindskog, A. Ahlen and Sternad, "Spatio-Temporal Equilization for Mulipath Environments in Mobile Radio Applications", Proc. Institute of Electrical and Electronics Engineers, Vehicular Technology Conference 1995, VTC '95, Chicago, Illinois, USA, July 25-28, 1995, S. 399-403, und O. Munoz and J. Fernandez, "Adaptive Arrays for frequency non-selective and selective channels", Proc. EUSIPCO '94, European Conference for Signal Processing, Edinburgh, S. 1536-1539 beschrieben sind, oder um "spatial-reference" Algorithmen, wie sie z.B. in M. Haardt and J.A. Nossek, "Unitary ESPRIT: How to obtain an increased Estimation Accuracy with a Reduced Computational Burden", IEEE Trans. on Signal Processing, Bd. 43, Nr, 5, May 1995, S. 1232-1242, R. Roy and R. Kailath, "ESPRIT"-Estimation of Signal Parameters via Rotational Invariance Techniques", IEEE Trans. Acoust., Speech, Signal Processing, Bd. 37, July 1989, S. 984-995 beschrieben sind.

"Temporal-refence" Algorithmen beruhen auf der (vorherigen!) Kenntnis eines Teils des Signals, z.B. einer absichtlich eingefügten Trainingssequenz zur Identifikation des Teilnehmers. Im Global System for Mobile Communications, GSM, ist eine solche normgemäß vorgesehen und dient zur Schätzung des Funkkanals bzw. zur Identifikation der Basis-station. im Gegensatz dazu benötigen "spatial-reference" Algorithmen keine vorherige Kenntnis der Teilnehmersignale, da diese Algorithmen die räumlich-geometrische Anordnung der einzelnen Antennenelemente in der Gruppe ausnützen.

Das optimale Empfangsverfahren zur Detektion von Teilnehmersignalen benutzt einen MLSE-Detektor (MLSE = maximum likelihood sequence estimation). Das MLSE-Verfahren ist z.B. in Lee/Messerschmitt, Digital Communication, S. 271-278, Kluwer Academic Publishers, Dordrecht, Niederlande, 1^{st} edition, 2^{nd} print, 1990 beschrieben. MLSE detektiert eine Empfangsfolge in optimaler Weise, d.h. mit geringstmöglicher Bitfehlerquote.

Eine Kombination von linearer Verarbeitung der Signale der Antennenelemente und einem MLSE ist in S, Ratnavel, A. Paulraj and A. G, Constantinides "MMSE Space-Time Equalization for GSM Cellular Systems", Proc. Institute of Electrical and Electronics Engineers, IEEE, Vehicular Technology Conference 1996, VTC '96, Atalanta, Georgia, S. 331-335 beschrieben.

Die linearen Verfahren der Antennensignalverarbeitung, wie bei Ratnavel erwähnt, haben nun den entscheidenden Nachteil, daß bei geringer winkelmäßiger Trennung (z.B, innerhalb der halben Antennenhauptkeulenbreite) des durch Mehrwegeausbreitung in mehrere Teilsignale aufgespaltenen und zeitlich varzögerten Teilnehmersignals das System wie ein linearer Entzerrer im Zeitbereich funktioniert. Bekanntlich sind aber lineare Entzerrerstrukturen aufgrund der Intersymbolinterferenz zufolge der Mehrwegeausbreitung (tiefe spektrale Nullstellen in der Übertragungsfunktion) nur sehr bedingt zur Entzerrung des Mobilfunkkanals geeignet.

Alle bisherigen Publikationen beziehen sich auf einen Teilnehmer pro Frequenz und Zeitschlitz, so z.B. auch "Spatio-Temporal Equalization for Multipath Environments in Mobile Radio Applications" von E. Lindskog, A. Ahlen und M. Sternad, 1995, IEEE. In diesem Dokument ist ein Verfahren bzw. eine Vorrichtung der eingangs genannten Art beschrieben. Sollen hingegen mehrere Teilnehmer auf ein- und derselben Frequenz und demselben Zeitschlitz bedient werden, so sind zusätzliche Vorkehrungen notwendig.

### OFFENBARUNG DER ERFINDUNG

Der Erfindung liegt nun die Aufgabe zugrunde, die Teilnehmerkapazität eines Mobilfunknetzes durch richtungsabhängigen Empfang zu erhöhen. Dies wird durch ein Verfahren der eingangs genannten Art erfindungsgemäß dadurch erreicht, daß zur Erhöhung der Teilnehmerkapazität im zellularen Mobilfunknetz mehrere (K) Teilnehmer auf ein- und derselben Frequenz und ein- und demselben Zeitschlitz versorgt werden, daß für jeden der K Teilnehmer eine nichtlineare Struktur vorgesehen ist oder für alle K Teilnehmer eine gemeinsame nichtlineare Struktur, die alle bedienten Teilnehmer im Zeitmultiplexverfahren abarbeitet, vorgesehen ist, daß für die tatsächliche Datendetektion das Ausgangssignal des Vorwärtsfilters vor der Subtraktion des Ausgangssignals des Rückkopplungsfilters einem dem jeweiligen Teilnehmer zugeordneten MLSE, Maximum Likelyhood Sequency Estimation, oder einem gemeinsamen vektoriellen MLSE zugeführt wird, wobei das Rückkopplungsfilter auf die Verarbeitungsfensterlänge D der MLSE bzw. des MLSE angepaßt ist.

Dies wird weiters durch eine Vorrichtung der eingangs genannten Art. erfindungsgemäß dadurch erreicht, daß zur Erhöhung der Teilnehmerkapazität im zellularen Mobilfunknetz mehrere (K) Teilnehmer auf ein- und derselben Frequenz und ein- und demselben Zeitschlitz versorgt werden, daß für jeden der K Teilnehmer eine nichtlineare Struktur vorgesehen ist oder für alle K Teilnehmer eine gemeinsame nichtlineare Struktur, die alle bedienten Teilnehmer im Zeitmultiplexverfahren abarbeitet, vorgesehen ist, daß für die tatsächliche Datendetektion ein dem jeweiligen Teilnehmer zugeordneter MLSE, Maximum Likelyhood Sequency Estimation, oder ein gemeinsamer vektorieller MLSE an den Ausgang des Vorwärtsfilters angeschlossen ist, sodaß das Ausgangssignal des Vorwärtsfilters vor der Subtraktion des Ausgangssignals des Rückkopplungsfilters dem MLSE zugeführt wird, wobei das Rückkopplungsfilter auf die Verarbeitungsfensterlänge D der MLSE bzw. des MLSE angepaßt ist. Jede dieser K gleichartigen nichtlinearen Strukturen kann parallel und unabhängig von den anderen K-1 Strukturen adaptiert und betrieben werden.

Dieses Verfahren hat die Vorteile, daß die Kapazität eines Mobilfunknetzes bei konstanter Anzahl der Basisstations-Standorte um den Faktor K (K in der Großenordnung 2 bis 5) erhöht wird; daß die für richtungsaufgelösten Empfang notwendigen Antennengruppen dennoch nur einmal bereitgestellt werden müssen; daß für jeden Teilnehmer die Signale der anderen Teilnehmer, die für den erstgenannten Teilnehmer Gleichkanalstörungen darstellen, durch das Vorwärtsfilter eliminiert werden; daß exzessive Zeitdisoersion (solche, die außerhalb der Verarbeitungsfensterlänge des MLSE-Detektors liegt), ebenfalls durch das Vorwärtsfilter eliminiert wird; daß infolge der nichtlinearen Adaption der Antennensignalgewichte Signale aus der gleichen Richtung oder aus sehr knapp beisammen liegenden Richtungen optimal komibiniert werden; und daß übliche MLSE-Detektoren, wie sie heute bereits in GSM-Empfängern realisiert sind, zur Kombination der Mehrwegesignale eines Teilnehmers Verwendung finden können.

Bei ausreichend verfügbarer Signalverarbeitungskapazität kann ein einziger MLSE zur Detektion der Daten aller bedienten Teilnehmer eingesetzt werden, wodurch eine Ersparnis an Hardwareaufwand lukriert werden kann. Außerdem kann die entscheidungsrückgekoppelte Struktur, ausreichend hohe Taktrate vorausgesetzt, alle bedienten Teilnehmer im Zeitmultiplexverfahren abarbeiten. Das heißt, man braucht nur eine einzige Hardwarerealisierung der rückgekoppelten Struktur. Die stürmische Entwicklung der Rechenleistung von handelsüblichen Signal- und Mikroprozessoren begünstigt den Einsatz solcher, zugegebenermaßen rechenaufwendiger Verfahren und Realisierungen.

### KURZE BESCHREIBUNG DER ZEICHNUNGEN

Die Erfindung wird anhand von Zeichnungen näher erläutert. Es zeigt: Fig. 1 eine Prinzipskizze des Verfahrens und der zugehörigen Empfängerstruktur; Fig. 2 zeigt eine Struktur (100) im Detail; und Fig. 3 zeigt eine Realiserung mit einem vektoriellen MLSE.

### BESTE AUSFÜHRUNGSFORM DER ERFINDUNG

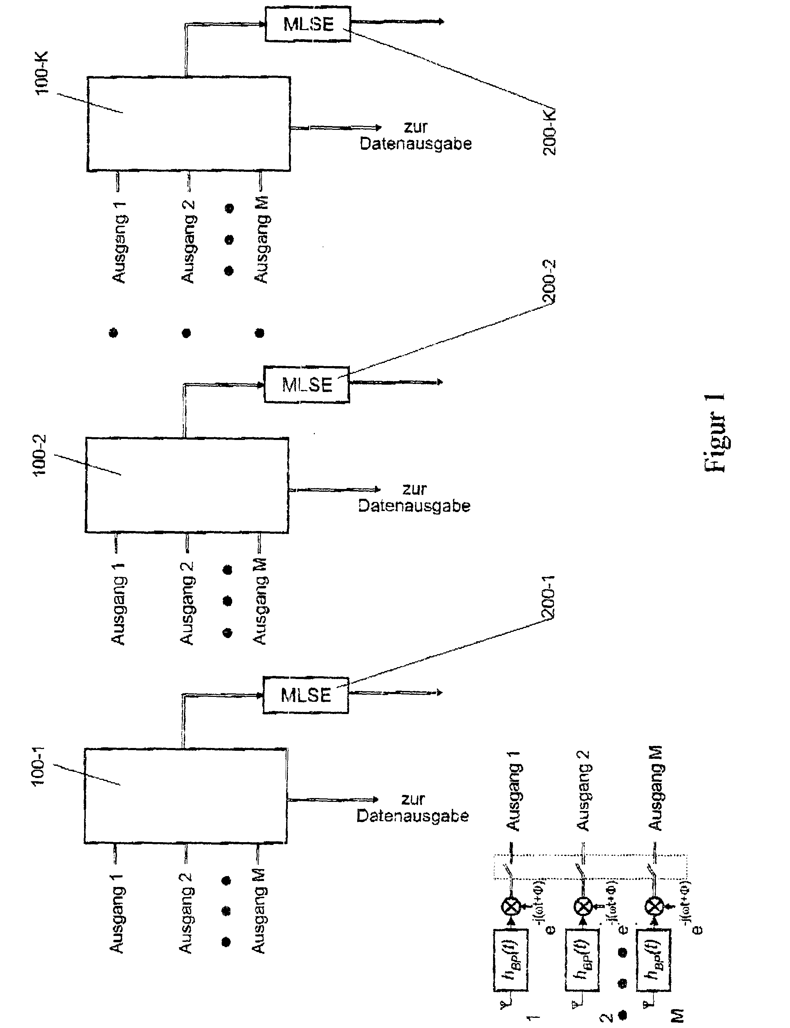

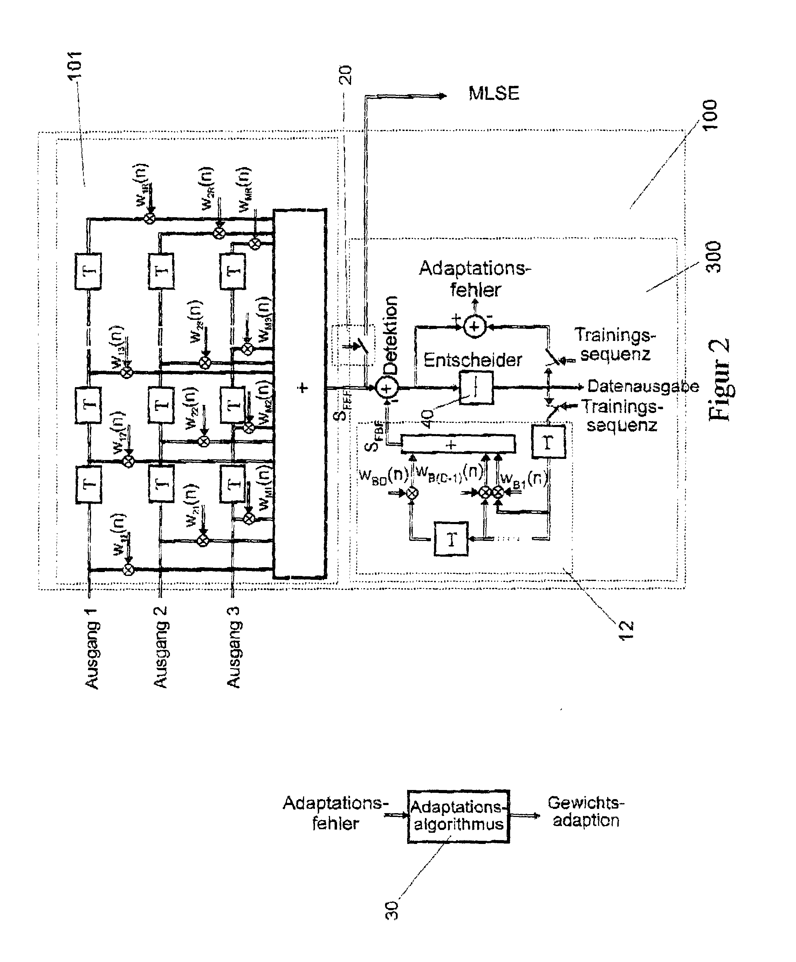

Fig. 1 zeigt eine Prinzipskizze des Verfahrens und der zugehörigen Empfängerstruktur. Es sind dabei K im wesentlichen identische Strukturen 100-1, 100-2 ... 100-K vorhanden, die zur Vereinfachung der Zeichnung nur symbolisch angedeutet sind. Ihr Aufbau ist aus Fig. 2 ersichtlich. Wenn auf ein konkretes Element solch einer Struktur Bezug genommen wird, wird das Bezugszeichen gemäß Fig. 2 mit einem Bindestrich und einer Zahl ergänzt, die angibt, welcher Struktur das Element angehört; so bezeichnet z.B. 12-2 das Rückkopplungsfilter der Struktur 100-2.

Die Antennenelemente 1 bis M sind mit den K Vorwärtsfiltern 101-k, charakterisiert durch ihre Gewichtsfaktoren W₁₁₋ₖ bis W_{MR-k} verbunden, K bezeichnet die Anzahl der Teilnehmer im selben Zeitschlitz und auf derselben Frequenz, und k ist eine Zahl zwischen 1 und K. Die nach den Antennenelementen plazierten Bandpaßfilter sind durch ihre Stoßantwort h_{BP}(t) charakterisiert. Die mit T bezeichneten Elemente bewirken eine Verzögerung des anliegenden Signals um eine Symboldauer T.

Das vom Vorwärtsfilter 101 aufbereitete Signal S_{FFF} wird dem Entscheider 40 zugeführt. Dieser entscheidet, ob das an seinem Eingang jeweils anliegende Signal, das stets verrauscht und verzerrt ist, logisch 1 oder logisch 0 bedeutet, und legt das entsprechende Signal an seinen Ausgang.

Dieses saubere Signal wird nun einem Rückkopplungsfilter 12 zugeführt. Die Rückkopplungsfilter 12-k sind jeweils eine gemeinsame lineare Struktur pro Teilnehmer, wobei ihre Länge an die Verarbeitungsfensterlänge D der/des MLSE 200-k angepaßt ist. Das vom Rückkopplungsfilter 12 aufbereitete Signal S_{FBF} wird dem vom Vorwärtsfilter 101 kommenden Signal S_{FFF} überlagert und gemeinsam dem Entscheider 40 zugeführt.

Die Schalter 20-k werden zur Datendetektion umgelegt. Die Strukturen 300-k bestehend aus Entscheider 40-k und Rückkopplungsfilter 12-k werden während der Datendetektion entweder zur kontinuierlichen Adaption der Antennensignalgewichte verwendet oder stillgelegt. Der Adaptionsalgorithmus 30-k adaptiert die Gewichtsfaktoren W₁₁₋ₖ bis W_{MR-k} für das Vorwärtsfilter 101-k und jene (W_{B1-k} bis W_{BD-k}) für das Rückkopplungsfilter 12-k. Es kann dazu einer der bekannten Algorithmen, wie sie z.B, in S. Haykin, Adaptive Filter Theory, Prentice-Hall, Englewood Cliffs, NJ, 1986 beschrieben sind, eingesetzt werden.

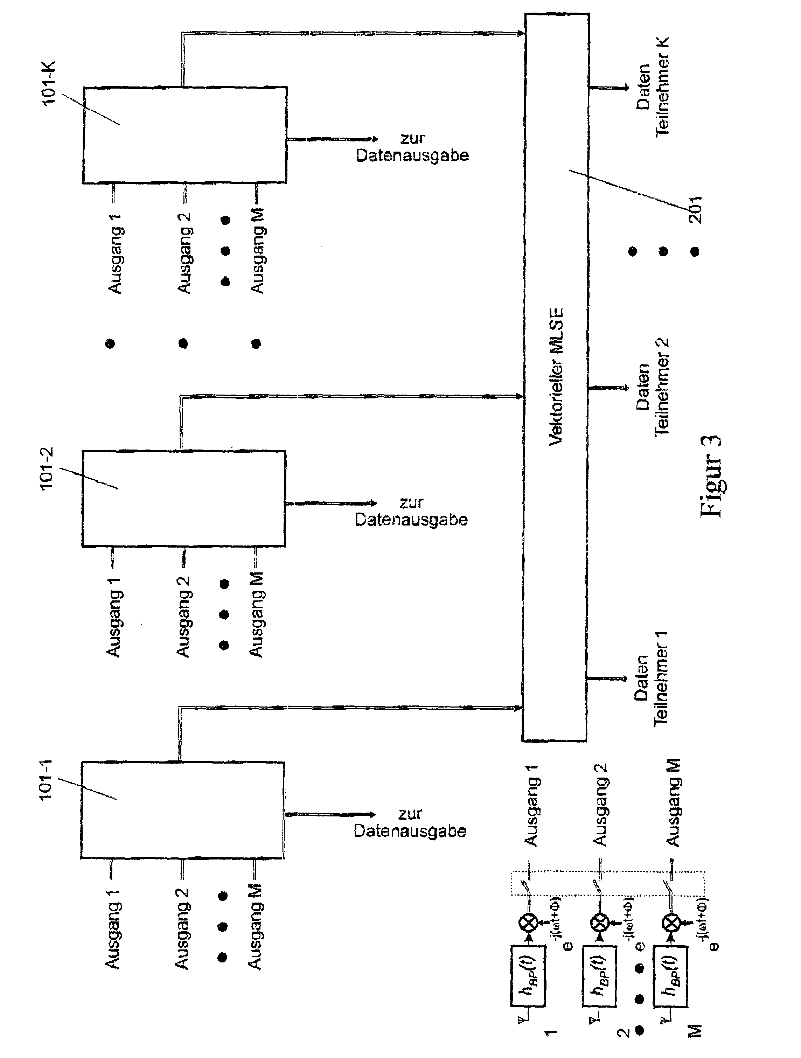

Fig. 3 zeigt dieselbe Empfängerstruktur, jedoch mit einem einzigen vektoriellen MLSE 201 für alle K Teilnehmer.

## Patentansprüche

1. Verfahren zur Datenübertragung in einem zellularen Mobilfunknetz, bei dem in mindestens einer Sende/Empfangsstation eine phasengesteuerte Antennengruppe mit mehreren Einzelantennen vorgesehen ist, die zur Erzielung einer Richtcharakteristik mit einer Schaltung (30) zur adaptiven Beeinflussung der Antennensignalgewichtsfaktoren (W₁₁₋ₖ bis W_{MR-k}) versehen ist und in der zur Adaption der Antennensignalgewichtsfaktoren (W₁₁₋ₖ bis W_{MR-k}) eine nichtlineare Struktur (100-k) zur Antennensignalverarbeitung eingesetzt wird, wobei die nichtlineare Struktur (100-k) aus Vorwärtsfilter (101-k), Rückkopplungsfilter (12-k) und Entscheider (40-k) besteht und die Antennensignale der Einzelantennen zunächst über das Vorwärtsfilter (101-k) geführt, dann dem Entscheider (40-k) zugeführt und vom Entscheider (40-k) über das Rückkopplungsfilter (12-k) geführt werden, wonach das Ausgangssignal (S_{FBF-k}) des Rückkopplungsfilters (12-k) vom Ausgangssignal (S_{FFF-k}) des Vorwärtsfilters (101-k) subtrahiert wird, **dadurch gekennzeichnet,** daß zur Erhöhung der Teilnehmerkapazität im zellularen Mobilfunknetz mehrere (K) Teilnehmer auf ein- und derselben Frequenz und ein- und demselben Zeitschlitz versorgt werden, daß für jeden der K Teilnehmer eine nichtlineare Struktur (100-k) vorgesehen ist oder für alle K Teilnehmer eine gemeinsame nichtlineare Struktur, die alle bedienten Teilnehmer im Zeitmultiplexverfahren abarbeitet, vorgesehen ist, daß für die tatsächliche Datendetektion das Ausgangssignal (S_{FFF-k}) des Vorwärtsfilters (101-k) vor der Subtraktion des Ausgangssignals (S_{FBF-k}) des Rückkopplungsfilters (12-k) einem dem jeweiligen Teilnehmer zugeordneten MLSE, Maximum Likelyhood Sequency Estimation, (200-k) oder einem gemeinsamen vektoriellen MLSE (201) zugeführt wird, wobei das Rückkopplungsfilter (12-k) auf die Verarbeitungsfensterlänge D der MLSE (200-k) bzw. des MLSE (201) angepaßt ist.

2. Verfahren nach Anspruch 1, **dadurch ge- kennzeichnet,** daß jede dieser K gleichartigen nichtlinearen Strukturen (100-k) parallel und unabhängig von den anderen K-1-Strukturen adaptiert und betrieben wird.

3. Vorrichtung zur Datenübertragung in einem zellularen Mobilfunknetz, in der eine phasengesteuerte Antennengruppe mit mehreren Einzelantennen vorgesehen ist, die zur Erzielung einer Richtcharakteristik mit einer Schaltung (30) zur adaptiven Beeinflussung der Antennensignalgewichtsfaktoren (W₁₁₋ₖ bis W_{MR-k}) versehen ist und in der zur Adaption der Antennensignalgewichtsfaktoren (W₁₁₋ₖ bis W_{MR-k}) eine nichtlineare Struktur (100-k) zur Antennensignalverarbeitung eingesetzt wird, wobei die nichtlineare Struktur (100-k) aus Vorwärtsfilter (101-k), Rückkopplungsfilter (12-k) und Entscheider (40-k) besteht und die Einzelantennen an die Eingänge des Vorwärtsfilters (101-k) angeschlossen sind, der Ausgang des Vorwärtsfilters (101-k) an einen Subtrahierer angeschlossen ist, dessen Ausgang mit dem Eingang des Entscheiders (40-k) verbunden ist, dessen Ausgang mit dem Eingang des Rückwärtsfilters (12-k) verbunden ist, dessen Ausgang mit dem zweiten Eingang des Subtrahierers verbunden ist, **dadurch gekennzeichnet,** daß zur Erhöhung der Teilnehmerkapazität im zellularen Mobilfunknetz mehrere (K) Teilnehmer auf ein- und derselben Frequenz und ein- und demselben Zeitschlitz versorgt werden, daß für jeden der K Teilnehmer eine nichtlineare Struktur (100-k) vorgesehen ist oder für alle K Teilnehmer eine gemeinsame nichtlineare Struktur, die alle bedienten Teilnehmer im Zeitmultiplexverfahren abarbeitet, vorgesehen ist, daß für die tatsächliche Datendetektion ein dem jeweiligen Teilnehmer zugeordneter MLSE, Maximum Likelyhood Sequency Estimation, (200-k) oder ein gemeinsamer vektorieller MLSE (201) an den Ausgang des Vorwärtsfilters angeschlossen ist, sodaß das Ausgangssignal des Vorwärtsfilters (101-k) vor der Subtraktion des Ausgangssignals (S_{FBF-k}) des Rückkopplungsfilters (12-k) dem MLSE (200-k bzm. 201) zugeführt wird, wobei das Rückkopplungsfilter (12-k) auf die Verarbeitungsfensterlänge D der MLSE (200-k) bzw. des MLSE (201) angepaßt ist.

## Claims

1. A process for data transmission in a cellular mobile Radio network in which at at least one transmitting receiving station a phase-controlled antenna group with a plurality of individual antennas is provided which is equipped with a circuit (30) for adaptively influencing the antenna signal weighting factors (W₁₁₋ₖ to W_{MR-k}) for producing a directional characteristic and, for the adaptation of the antenna signal weighting factors (W₁₁₋ₖ to W_{MR-k}) a non-linear structure (100-k) is used for antenna signal processing whereby the non-linear structure (100-k), comprised of a forward filter (101-k), a feedback filter (12-k) and a decision circuit (40-k) and the antenna signals of the individual antennas are initially fed via the forward filter (101-k), then fed to the decision circuit (40-k) and from the decision circuit (40-k) via the feed back filter (12-k), after which the output signal (S_{FBF}-k) of the feedback filter (120k) is subtracted form the output signal (S_{FFF}-k) of the forward filter (101-k), **characterized in that** for increasing the subscriber capacity in the cellular mobile network, s plurality (K) of subscribers are supplied in the cellular mobile radio network at one and the same frequency and one and the same time slot, that for each of the K subscribers, a non-linear structure (100-k) or for all K subscribers a common non-linear structure is provided to which all serviced subscribers are treated in a time multiplex process, that for the actual data detection the output signal ( S_{FFF}-k ) of the forward filter (101-k) before subtraction of the output signal ( S_{FBF}k ) of the feedback filter (12-k) is fed to an MLSE, Maximum Likelihood Sequence Estimation, (200-k) for each subscriber or to a common vectorial MLSE (201) whereby the feedback filter (12-k) is matched to the processing window length D of the MLSE (200-k) or vectorial MLSE (201).

2. A process according to claim 1 **characterized in that** each of these K equivalent non-linear structures (100-k) are adapted and driven in parallel and independent from the other K-1 structures.

3. A device for data processing in a cellular mobile radio network in which a phase-controlled antenna group with a plurality of individual antennas is provided which is equipped with a circuit (30) for adaptively influencing the antenna signal weighting factors (W₁₁₋ₖ to W_{MR-k}) for producing a directional characteristic and in the adaptation of the antenna signal weighting factors (W₁₁₋ₖ to W_{MR-k}) a non-linear structure (100-k) is used for antenna signaling processes, whereby the non-linear structure (100-k) is comprised of a forward filter (101-k), a feedback filter (12-k) and a decision circuit (40-k) and the individual antenna are connected to the inputs of the forward filter, the output of the forward filter (101-k) is connected to a subtracter whose output is connected with the input of the decision circuit (40-k), whose output is connected with the input of the feedback filter (12-k) whose output is connected with the second input of the subtracter, **characterized in that** for increasing the subscriber capacity in the cellular mobile radio network, a plurality (K) of subscribers are supplied at one and the same frequency and one and the same time slot, that for each of the K subscribers a non-linear structure (100-k) is provided or for all K subscribers there is a common non-linear structure which deals with all serviced subscribers in a time multiplex process, that for the actual data detection a MLSE, Maximum Likelihood Sequence Estimation, (200-k) is provided for each respective subscriber or a common vectorial MLSE (201) is provided, to which the output of the forward filter is connected, so that the output signal of the forward signal (101-k) is fed to the MLSE (200-k or 201, resp.) prior to the subtraction of the output signal (S_{FBF-k}) of the feedback filter (12-k), whereby the feedback filter (12-k) is matched to the processing window length D of the MLSE (200-k) or the MLSE (201).

## Revendications

1. Procédé de transmission dc données dans un réseau de télécommunications mobile cellulaire dans lequel, dans au moins une station d'émission/réception, un groupe d'antennes à commande de phase avec une pluralité d'antennes individuelles est prévu, qui, afin d'obtenir une caractéristique directionnelle, est muni d'un circuit (30) destiné à agir de façon adaptée sur des facteurs de pondération des signaux d'antennc (W₁₁₋ₖ à W_{MR-k}) et dans lequel, pour l'adaptation des facteurs de pondération des signaux d'antenne (W₁₁₋ₖ à W_{MR-k}) une structure non linéaire (100-k) pour le traitement des signaux d'antenne est utilisée, la structure non linéaire (100-k) étant composée de filtres non récursifs (101-k) de filtres récursifs (12-k) et de circuits de décision (40-k) et les signaux d'antenne des antennes individuelles passant d'abord par le filtre non récursif (101-k) ensuite par le circuit de décision (40-k) et, à partir du circuit de décision (40-k) via le filtre récursif (12-k) après lequel le signal de sortie (S_{FFF}-k) du filtre récursif (12-k) étant retranché du signal de sortie (S_{FBF}-k) du filtre non récursif (101-k), **caractérisé en ce que**, afin d'augmenter la capacité en abonnés dans le réseau mobile cellulaire, une pluralité (K) d'abonnés sont desservis à une seule et même fréquence et dans un seul et même intervalle de temps, en ce que, pour chacun des K abonnés, une structure non linéaire (100-k) est prévue, ou pour tous les K abonnés, une structure non linéaire commune, traitant tous les abonnés desservis par un procédé de multiplexage temporel est prévue, en ce que pour la détection réelle des données, le signal de sortie (S_{FFF}-k) du filtre non récursif (101-k) est amené, avant le retranchement du signal de sortie (S_{FBF}-k) du filtre récursif (12-k), à un estimateur de séquence présentant la plus grande vraisemblance MLSE (200-k) associée à l'abonné respectivement concerné ou à un estimateur MSLE vectoriel commun (201), le filtre récursif (12-k) étant adapté à la longueur de fenêtre de traitement D de l'estimateur MLSE (200-k) ou, respectivement de l'estimateur MLSE (201).

2. Procédé selon la revendication 1, **caractérisé en ce que** chacune desdites structures non linéaires similaires K (100-k) est adaptée et fonctionne, en parallèle et indépendamment des autres K-1 structures.

3. Dispositif de transmission de données dans un réseau de télécommunications mobile cellulaire dans lequel un groupe d'antennes à commande de phase avec une pluralité d'antennes individuelles est prévu, qui, afin d'obtenir une caractéristique directionnelle, est muni d'un circuit (30) destiné à agir de façon adaptée sur des facteurs de pondération des signaux d'antenne (W₁₁₋ₖ à W_{MR-k}) et dans lequel, pour l'adaptation des facteurs de pondération des signaux d'antenne (W₁₁₋ₖ à W_{MR-k}) une structure non linéaire (100-k) pour le traitement des signaux d'antenne est utilisée, la structure non linéaire (100-k) étant composée de filtres non récursifs (101-k) de filtres récursifs (12-k) et de circuits de décision (40-k) et les antennes individuelles étant raccordées aux entrées du filtre non récursif (101-k), la sortie du filtre non récursif (101-k) étant raccordée à un circuit de soustraction dont la sortie est reliée à l'entrée du circuit de décision (40-3) dont la sortie est reliée à l'entrée du filtre récursif (12-k) dont la sortie est reliée à la deuxième entrée du circuit de soustraction, **caractérisé en ce que**, afin d'augmenter la capacité en abonnés dans le réseau mobile cellulaire, une pluralité (K) d'abonnés sont desservis à une seule et même fréquence et dans un seul et même intervalle de temps, en ce que, pour chacun des K abonnés, une structure non linéaire (100-k) est prévue où, pour tous les K abonnés, une structure non linéaire commune, traitant tous les abonnés desservis par un procédé de multiplexage temporel est prévue, en ce que pour la détection réelle des données, un estimateur de séquence à vraisemblance maximale MLSE (200-k) associé à l'abonné respectivement concerné ou un estimateur MLSE vectoriel commun (201) est raccordé à la sortie du filtre non récursif, de sorte que le signal de sortie du filtre non récursif (101-k) avant le retranchement du signal de sortie (S_{FBF}-k) du filtre récursif (12-k) est amené à l'estimateur MLSE (200-k ou, respectivement 201), le filtre récursif (12-k) étant adapté à la longueur de fenêtre de traitement D de l'estimateur MLSE (200-k) ou, respectivement de l'estimateur MLSE (201).
